# EUROPEAN PATENT SPECIFICATION

(11) **EP 0 337 926 B1**
(45) Date of publication and mention of the grant of the patent: **15.01.1997**
(21) Application number: 89730079.4
(22) Date of filing: 21.03.1989
(51) Int. Cl.: C08G 85/00, C08J 3/02, C08F 20/00, C08F 22/00, C08F 16/00, C08F 246/00, C08G 18/08, C08G 18/28, C08G 59/42, C08G 59/14

(54) **Storage stable aqueous emulsions**
Lagerstabile wässrige Emulsionen
Emulsions aqueuses stables à l'entreposage

(30) Priority: 21.03.1988 DE 3809840
(43) Date of publication of application: 18.10.1989
(73) Proprietor: DAINIPPON INK AND CHEMICALS, INC., Itabashi-ku, Tokyo 174 (JP)
(72) Inventor: Frings, Rainer B., Dr., D-1000 Berlin 41 (DE); Lachowicz, Artur, Dr., D-1000 Berlin 30 (DE); Grahe, Gerwald F., Dr., D-1000 Berlin 33 (DE)
(74) Representative: Maikowski, Michael, Dipl.-Ing. Dr.

(56) References cited:
- EP-A- 0 001 088
- EP-A- 0 212 409
- FR-A- 2 325 668
- US-A- 2 967 173
- PATENT ABSTRACTS OF JAPAN, vol. 7, no. 53 (C-154), 3rd March 1983; & JP-A-57 202 317 (DAINIPPON) 11-12-1982
- PATENT ABSTRACTS OF JAPAN, vol. 7, no. 53 (C-154), 3rd March 1983; & JP-A-57 202 318 (DAINIPPON) 11-12-1982
- G.Rokicki and Lewandowski, Die Angewandte Makromolekulare Chemie 148 (1987) 53-66

## Description

### BACKGROUND OF THE INVENTION

### Field of the Invention

The present invention relates to aqueous emulsions of cyclocarbonate group-containing polymers and to a process for their manufacture.

Emulsions according to the spirit of the invention mean also suspensions.

### Description of the Prior Art

Stable aqueous emulsions of numerous polymers are known. S. Paul (Surface Coatings, J. Wiley & Sons, 1985) describes for instance aqueous emulsions of epoxy, polyurethane, alkyd and polyester resins.

Aqueous emulsions of functional acrylic and methacrylic polymers are described by G.Y. Tilak in Progress in Organic Coatings, 13 (1985), 333-345. Important functional groups, which can be reacted in the ensuing hardening of the emulsified (meth)acrylic resins, are for instance hydroxyl, carboxyl, amide and glycidyl groups.

An interesting functional group is presented by the 2-oxo-1.3-dioxolane group. The introduction of this group succeeds by reaction of epoxy compounds with carbon dioxide (e.g. DE-OS 35 29 263).

Solutions of cyclocarbonate-containing resins in common organic solvents are known. In DE-OS 35 29 263 cyclocarbonate-containing epoxy resins are described which can be present either solvent-free or dissolved in organic solvents. Also cyclocarbonate group-containing acrylic polymers are known. Subject of the European patent application EP 1088 are cyclocarbonate group-containing polymerizates which are prepared by solution polymerization.

In US-PS 29 67 173 processes are described which are suitable for the preparation of cyclocarbonate functional polymer solutions.

In contrast to organic solvent-containing polymer systems aqueous emulsions are especially ecologically harmless and are being used to an increasing extent for instance in the areas of coatings, adhesives or sealants. The manufacture of cyclocarbonate group-containing polymers in aqueous media therefore is of great interest, but it is not sufficiently solved within the prior art.

US-PS 29 67 173, for example, describes that in the emulsion polymerization of cyclocarbonate group-containing monomer mixtures particulate precipitates are formed and no stable emulsions can be obtained. Also the bibliographical reference V.I. Yeliseyeva in I. Piirma (Ed.) "Emulsion Polymerization", Academic Press, 1982, p. 247 describes difficulties which are encountered on emulsifying in aqueous systems. The cyclocarbonate group-containing monomers exhibit such a strong aprotic polar character (viz. Huls AG, information brochure "Alkylencarbonate", 1985) that until now all the attempts failed to prepare aqueous emulsions.

From the prior art results that the known methods for the manufacture of cyclocarbonate group-containing polymers can be applied only to polymerizations in organic solvents, but that they are unsuitable for the manufacture of aqueous emulsions of cyclocarbonate group containing polymers and especially of storage stable aqueous emulsions of such polymers.

### SUMMARY OF THE INVENTION

Object of the present invention is to manufacture storage stable aqueous emulsions of cyclocarbonate-group containing polymers.

The aqueous emulsions according to the invention remain stable for at least one month in the temperature range of 15 to 30°C and have a polymer content of 5 to 80%, advantageously of 25 60 %. They contain emulsified polymers which on average bear per macromolecule at least two 2-oxo-1.3-dioxolan-4-yl groups of general formula (II) below.

More particularly, according to a first embodiment of the present invention, there is provided an aqueous emulsion, in which it has a solid content of 5 to 80%, advantageously of 25 to 60%, of emulsified polymers in which the main chain consists of partially substituted -CH₂- groups, according to the general formula (I) 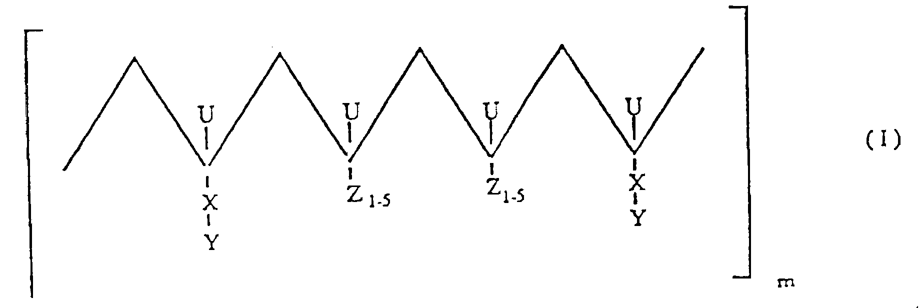 wherein U, X, Z₁ to Z₅ have the following meaning:
U = -H, -CH₃, -COOH, -COOCH₃, -CONH₂, -COO-(CH₂)₁₋₄-X-Y
Y = 2-oxo-1.3-dioxolan-4-yl groups of general formula (II) 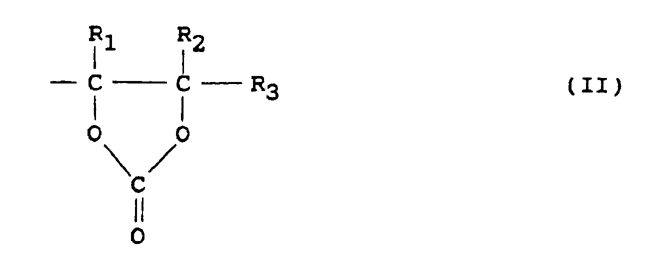 in which
R₁, R₂ and R₃ each stand for a hydrogen atom or a substituted or unsubstituted methyl group, wherein the residues can be identical to each other or different, 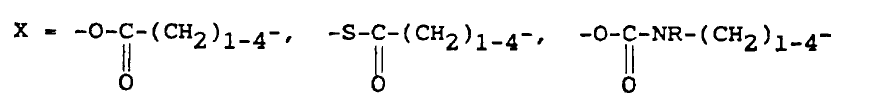 where R = H or alkyl,
Z₁ = -COO-(CH₂)₀₋₁₇-CH₃
Z₂ = phenyl-, meta-, ortho-, para-substituted alkylphenyl groups
Z₃ = -COOH
Z₄ = -CN, -COO-(CH₂)₁₋₄-N-(alkyl)₂, -COO-CH₂-CH₂-N〈
Z₅ = -COO-(CH₂)₁₋₄-OH, -COO-(CH₂-CH₂O)₁₋₁₀-CH₂-CH₂-OH
in which at least two groups -X-Y per macromolecule have to be present and the groups Z₁ or Z₂ can be present either alone or Z₁ in combination with Z₂ to Z₅, wherein the sum of the weight portions of the polymerizable starting materials with the groups -X-Y and Z₄ in the emulsified macromolecule must not exceed the value of 70% by weight.

According to a second embodiment of the present invention, there is provided an aqueous emulsion, in which it has a solid content of 5 to 80%, advantageously of 25 to 60%, of emulsified polymers in which the main chain is built according to the general formula (III) and the secondary OH groups are fully or partially substituted by R₄ 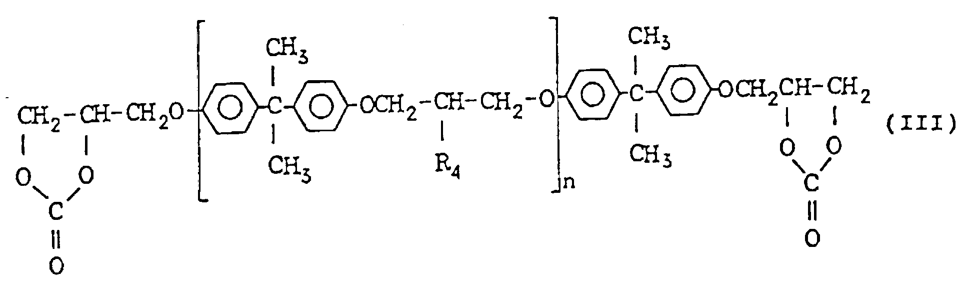 wherein n stands for a number from 1 to 10 and R₄ is a half ester group of the general formula (IV) 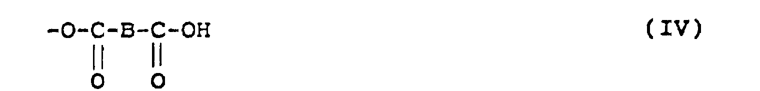 with B being equal to -(CH₂)₂₋₃-, -CH=CH-, or 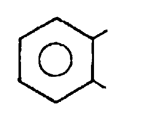 which is fully or partially neutralized with alkali metal ions or with secondary or tertiary amines.

According to a third embodiment of the present invention, there is provide an aqueous emulsion, in which it has a solid content of 5 to 80%, advantageously of 25 to 60%, of emulsified polymers in which the main chain is built according to the general formula (V) below: 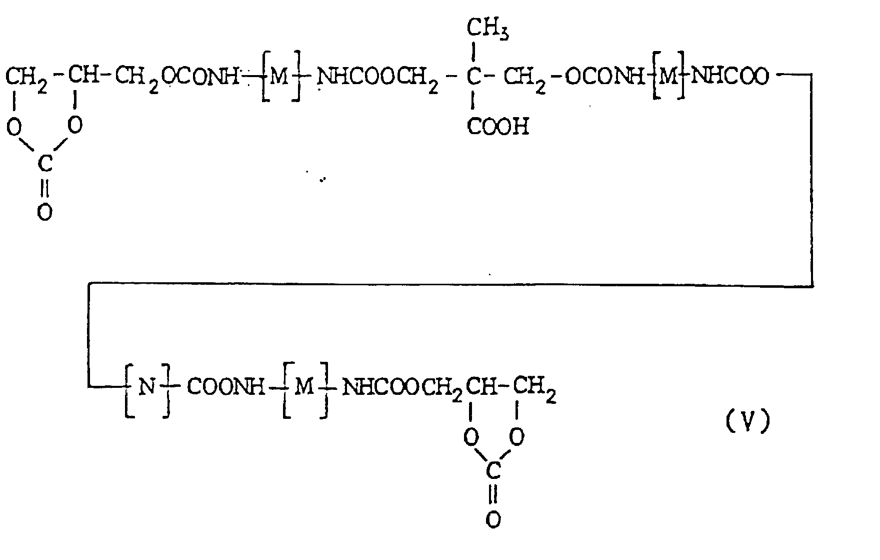 wherein [M] stands for an aliphatic, cycloaliphatic, aromatic or arylaliphatic group with 6 to 20 carbon atoms and [N] is equivalent to a polyalkylene oxide with 0 to 20 repetitive units, to an aliphatic or to a mixed aliphatic-aromatic polyester with a molecular weight of up to 4000 g/mol and wherein the acid groups which are incorporated into the main chain each 400 to 500 molecular weight units are fully or partially neutralized with alkali metal ions or with secondary or tertiary amines.

According to a fourth embodiment of the present invention, there is provided an aqueous emulsion, in which it has a solid content of 5 to 80%, advantageously of 25 to 60%, of emulsified polymers in which the straight or branched main chain is built according to the general formula (VI) below: 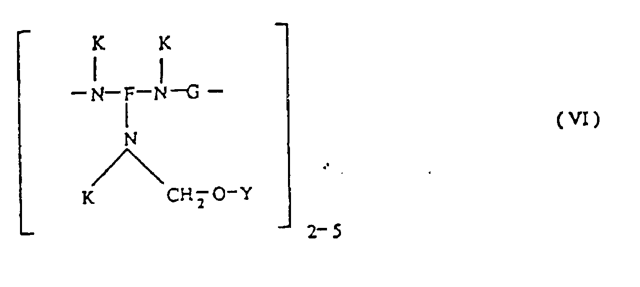 wherein
F = triazinyl group
G = -CH₂-O-CH₂-, or -CH₂-,
K = -H, -CH₂COOH, or -CH₂-O-R (with R = H, alkyl with 1 to 4 carbon atoms)
Y = 2-oxo-1.3-dioxolan-4-yl group according to general formula (II)
in which at least two groups Y per macromolecule and not more than 2 groups Y per triamino-triazine unit have to be present.

According to a fifth embodiment of the present invention, there is provided an aqueous emulsion, in which it has a solid content of 5 to 80%, advantageously of 25 to 60%, of emulsified polymers in which the straight or branched main chain is built according to the general formula (VII) 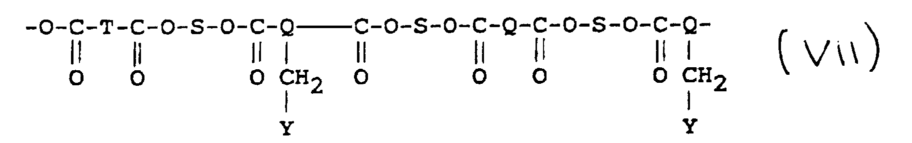 wherein
T = -(CH₂)₂₋₁₀-, -(CH₂-CHR)₁₋₅-, or -CH=CR- (with R = H, alkyl, ortho-, meta-, para-substituted phenyl groups)
S = -(CH₂)₂₋₁₂, -(CH₂-CHR-O-)₁₋₂₀-, or
   -CR₄₋ₘ[(CH₂-CHR-O-)₁₋₂₀]ₘ
   with R = H or alkyl, and m = 1 to 4
Q = tri- or tetrasubstituted phenyl groups with one or two additional -COOH groups
Y = 2-oxo-1.3-dioxolan-4-yl group according to general formula (II)
in which at least 2 groups Y per macromolecule have to be present and in which the free acid groups in emulsion are fully or partially neutralized with alkali metal ions or with secondary or tertiary amines.

Object of the present invention is also a process for the manufacture of such emulsions by emulsion polymerization in water of an olefinic unsaturated polymerizable compound with at least one cyclocarbonate group of general formula (II), and emulsion copolymerization in water of a mixture of olefinic unsaturated polymerizable compounds of which at least one contains at least one cyclocarbonate group of general formula (II).

Object of the present invention is further a process for the manufacture of storage stable aqueous emulsions of cyclocarbonate group-containing polymers, in which solvent-free and solvent-containing polymers which on average bear per molecule at least two 2-oxo-1.3-dioxolan-4-yl residues of general formula I, are emulsified in water.

In a preferred embodiment, the present invention provides a process for the manufacture of an aqueous emulsion of emulsified polymers, in which polymers are manufactured by aqueous emulsion copolymerization of
a) 1 to 60 % by weight of a polymerizable compound containing group (II) with
b) 20 to 95 weight % of non-functional esters of arylic or methacrylic acid in the alcohol residue and optionally
c) 5 to 75 weight % of aromatic vinyl compounds
d) 1 to 40 weight % of hydroxyl group bearing alpha, β-ethylenic unsaturated compounds unsaturated compounds
e) 1 to 20 weight % of alpha, β-unsaturated mono- or dicarboxylic acids
f) 1 to 40 weight % of polar-aprotic acrylic or methacrylic monomers with 1 to 12 carbon atoms an at least one nitrile- or dialkylamino group in the side group,
wherein the sum of the weight portions a) and f) must not exceed the value of 70 weight % in the polymer, with anionic emulsifier of a high hydrophilic value and a water-soluble azo initiator or a water-soluble organic redox-initiator system in the temperature range between 0 and 70 °C.
Object of the present invention is also a coating material containing one or more aqueous emulsions with or without usual additives.

### Detailed Description of the Invention

For the manufacture of storage stable aqueous emulsions of cyclocarbonate group-containing plymers according to the invention by the process of emulsion polymerization compounds are suitable as starting materials which beside an unsaturated polymerizable function have at least one 2-oxo-1.3.-dioxolan-4-yl-group, especially
a) derivatives of unsaturated monobasic acids such as for instance acrylic, methacrylic or crotonic acid, e.g. 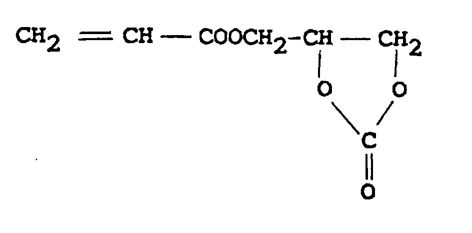 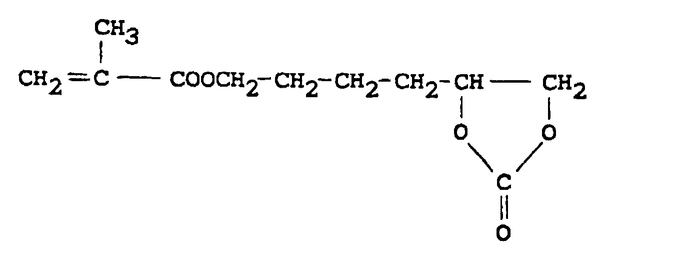 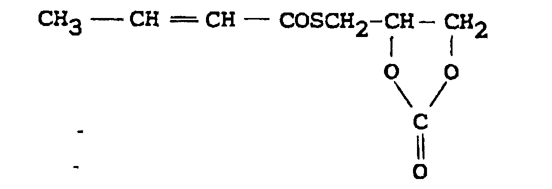 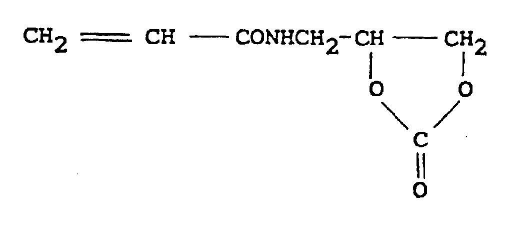
b) derivatives of polybasic unsaturated carboxylic acids such as for instance maleic, fumaric or itaconic acid, e.g. 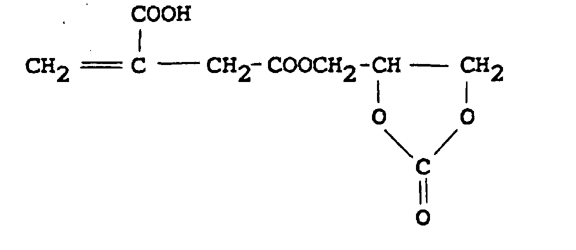 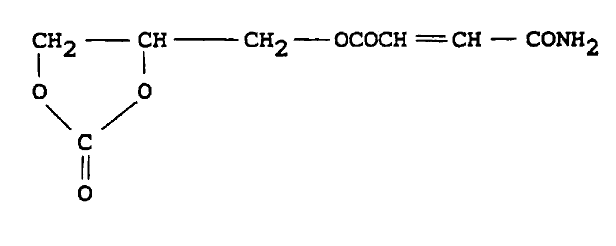 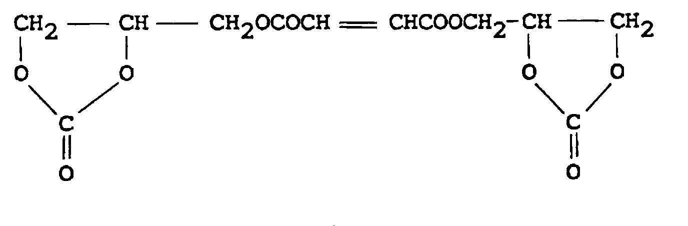 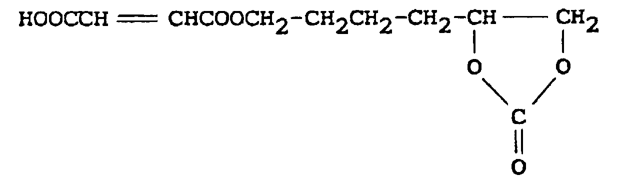 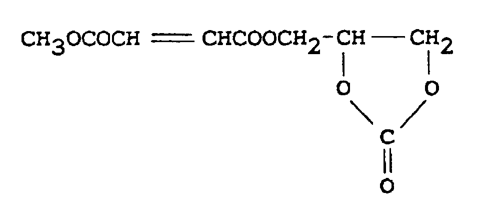
c) ethylenic derivatives, e.g. 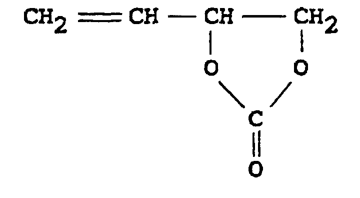 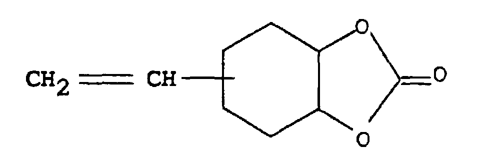 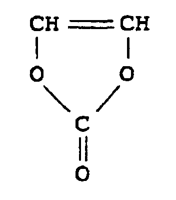
d) vinylesters which in the acidic residue bear at least one 2-oxo-1.3-dioxolan-4-yl-group, e.g. 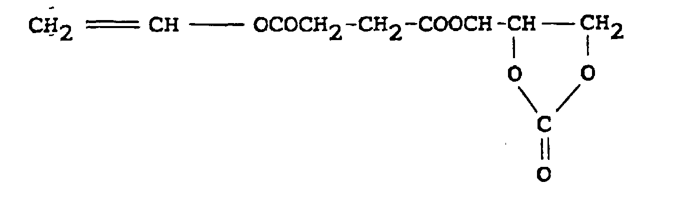 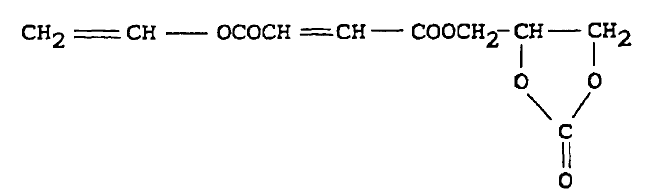
e) vinylethers, e.g. 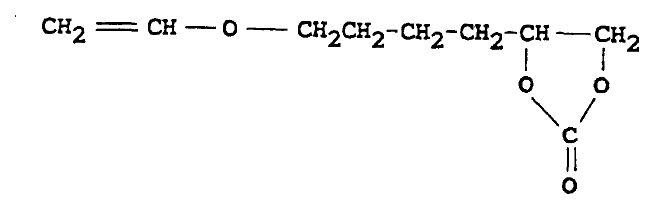
f) derivatives of mono- or polyfunctional unsaturated alcohols, e.g.

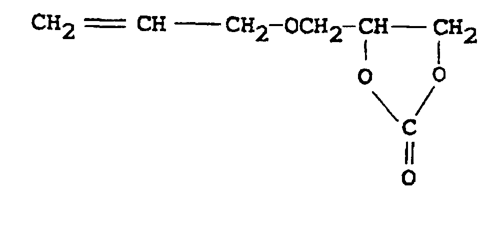

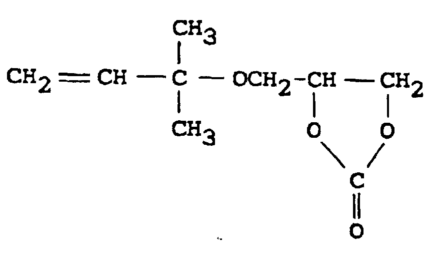

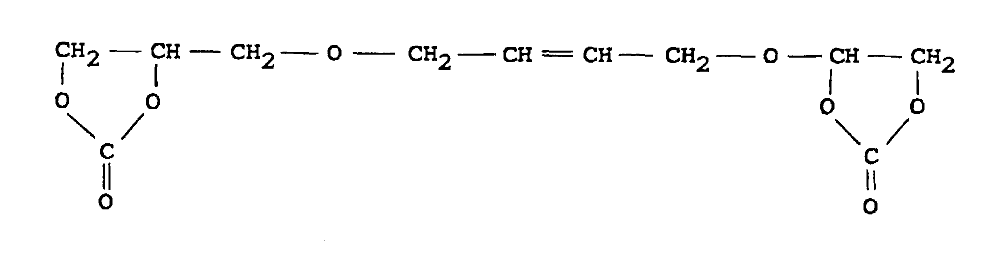

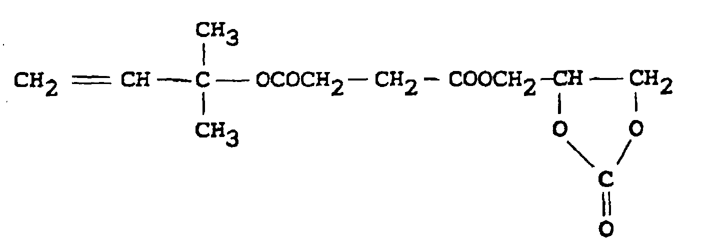

Such substances can be transferred by aqueous emulsion polymerization into polymers with unchanged cyclocarbonate functions. For this purpose either single cyclocarbonate monomers, e.g. 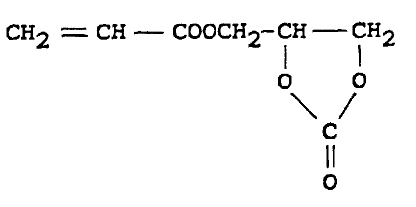 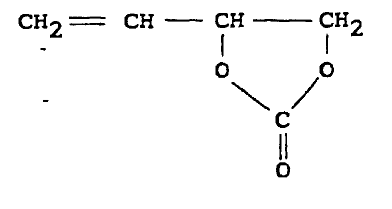 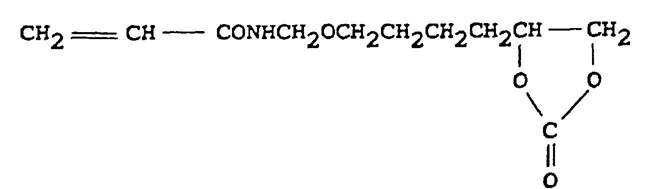 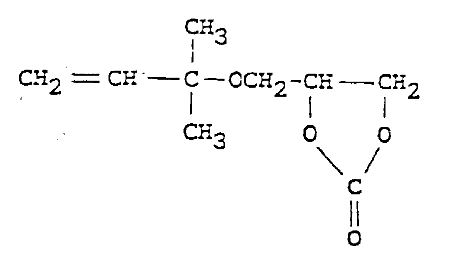 or their copolymers with one another or advantageously in combination with one or more of the common vinyl-, diene- or acrylmonomers or compounds (e.g. esters of maleic acid) are used.

Especially advantageously, styrene, vinyltoluene, acrylic and methacrylic acid and their esters with aliphatic, cycloaliphatic and arylaliphatic alcohols with 1 to 18 carbon atoms, alkylaminoalkylacrylates, as e.g. diethylaminoethylmethacrylate, acrylonitrile or ethylenic unsaturated monomers with OH groups in the side chain can be plymerized with monomers which bear at least one 2-oxo-1.3-dioxolan-4-yl- group.

The process according to the invention for the manufacture of storage stable aqueous emulsions of cyclocarbonate group-containing polymers by the principle of emulsion polymerization or emulsion copolymerization can be carried out either without emulsifier or in presence of an emulsifier. Suitable are numerous generally known emulsifiers (e.g. McCutcheon, "Detergents and Emulsifiers", Allied Publishing Co., New Jersey, 1984) of anionic nature.

The process according to the invention for the manufacture of storage stable aqueous emulsions of cyclocarbonate group-containing polymers by the principle of emulsion polymerization is based upon the radical polymerization in aqueous emulsion. Radicals which start the emulsion polymerization can be generated for instance thermically or by a redox reaction. Suitable substances are water-soluble azo compounds or organic redox systems. Several substances of the mentioned classes are known as polymerization initators (e.g. F. Runge and E. Taeger, "Einführung in die Chemie und Technologie der Kunststoffe", Akademie-Verlag Berlin, 1976). Single initiators of the mentioned groups as well as mixtures of several of such compounds can be used in the process according to the invention.

The amounts of the particular reaction components in the process according to the invention can be varied in a wide range, so that the polymer content of the obtained emulsions is between 5 and 80%, advantageously between 25 and 60%, and more advantageously between 30 and 40%

The emulsion polymerization by the process according to the invention can be carried out within a wide temperature range. Depending upon the activity of the used initiator system and the used emulsifiers it can take place at a temperature between 0° and 100°C, advantageously between 20° and 80°C. An addition of small amounts of organic solvents can have a favorable effect upon the emulsion polymerization for the manufacture of storage stable aqueous emulsions of the present invention, especially if the obtained aqueous emulsion is applied to coatings or paints. Usually the emulsion polymerization is done free of solvents.

The emulsion polymerization of the present invention can be carried out with an addition of other additives, e.g. emulsion stabilizers, chain transfer agents, buffer systems, detergents, defoamers, conservation agents. In this respect the emulsion polymerization according to the present invention does not differ from the known processes of emulsion polymerization (e.g. I. Piirma, (Ed.), "Emulsion Polymerization", Academic Press, 1982).

The storage stability of the aqueous polymer emulsions of the present invention can be influenced advantageously by polymerizing in of monomers which have acid or basic groups respectively, e.g. acrylic or methacrylic acid or dimethylaminoethyl-methacrylate. However, also without incorporation of such monomers, aqueous emulsions of cyclocarbonate group-containing polymers can be obtained by the process according to the invention which exhibit excellent storage stability over several months.

An especially interesting variation of the process according to the invention for the manufacture of stable aqueous emulsions of cyclocarbonate group-containing polymers with regard to the ensuing application of the emulsions according to the invention is, if desired, beside one or more cyclocarbonate containing monomers and other customary monomers which can be used in an emulsion polymerization in water, substances with a basic or acidic character are polymerized in (e.g. substituted aminoalkylacrylates and acrylic acids). In this way storage stable aqueous emulsions can be manufactured which after complete or partial neutralization result in polymers which are electrodepositable and can be used as electrodeposition coatings.

It is also possible, however, that polymers which on average contain at least two cyclocarbonate residues of the general formula I per macromolecule as side or end groups, can be emulsified in water. The polymers to be emulsified can be present free of solvent or solvent-containing and can have a quite variable structure.

A group of polymers which can be transferred into storage stable emulsions by emulsification in water are substances which are obtained by polymerization of olefinic unsaturated monomers while at least one of the monomers participating in the polymerization has at least one cyclocarbonate function. The following monomers can be transferred into polymers and afterwards can be processed into storage stable emulsions by emulsification in water.

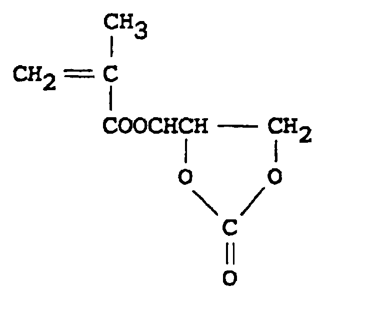

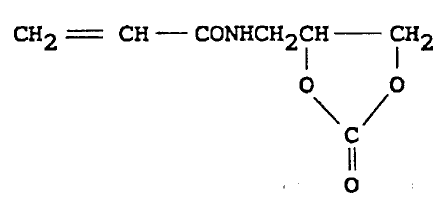

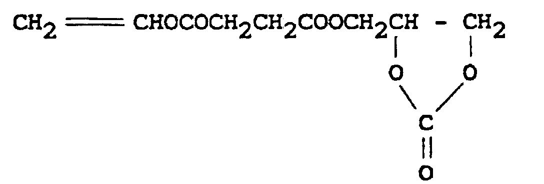

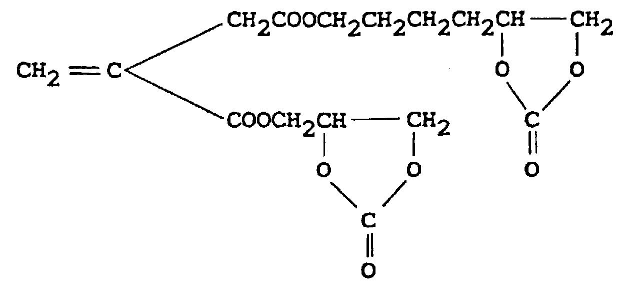

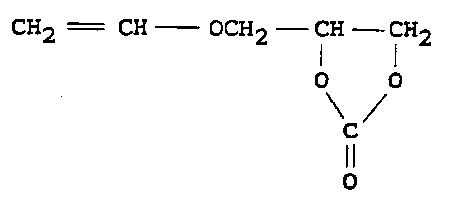

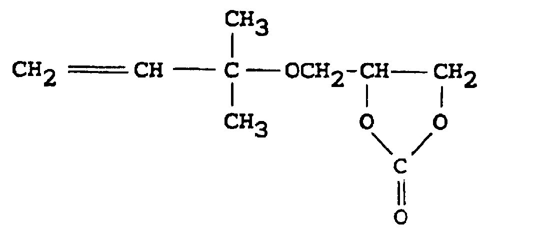

One of such substances can be polymerized with itself or several with themselves as well as together with all other polymerizable compounds.

Several classes of polymers can be modified with cyclocarbonate groups after their synthesis by a polycondensation or polyaddition process. This can be effected by catalyzed reaction of glycidyl groups with CO₂ according to DE-OS 35 29 263 or by reaction with suitable cyclocarbonate compounds, e.g. with hydroxymethylcyclocarbonate, The thus-modified polymers can be transformed into a storage stable emulsion by emulsifying in water and possibly by removal of a solvent. For this acidic or basic groups are needed which are completely or partially neutralized before or during the emulsifying. Important polymer classes which can be modified with cyclocarbonate groups and transformed subsequently into an aqueous emulsion are epoxy resins, polyurethane resins, melamine resins and polyester resins.

Another group of polymers which can be transferred into storage stable emulsions by emulsifying in water are substances which are prepared by polycondensation, e.g. epoxy, polyurethane, urea/melamine or alkyd/polyester resins.

Thus commercial epoxy resins (e.g. from bisphenol A / epichlorohydrin) can be converted according to DE-OS 35 29 263 into cyclocarbonate-modified polymers II as in Reaction Scheme (1).

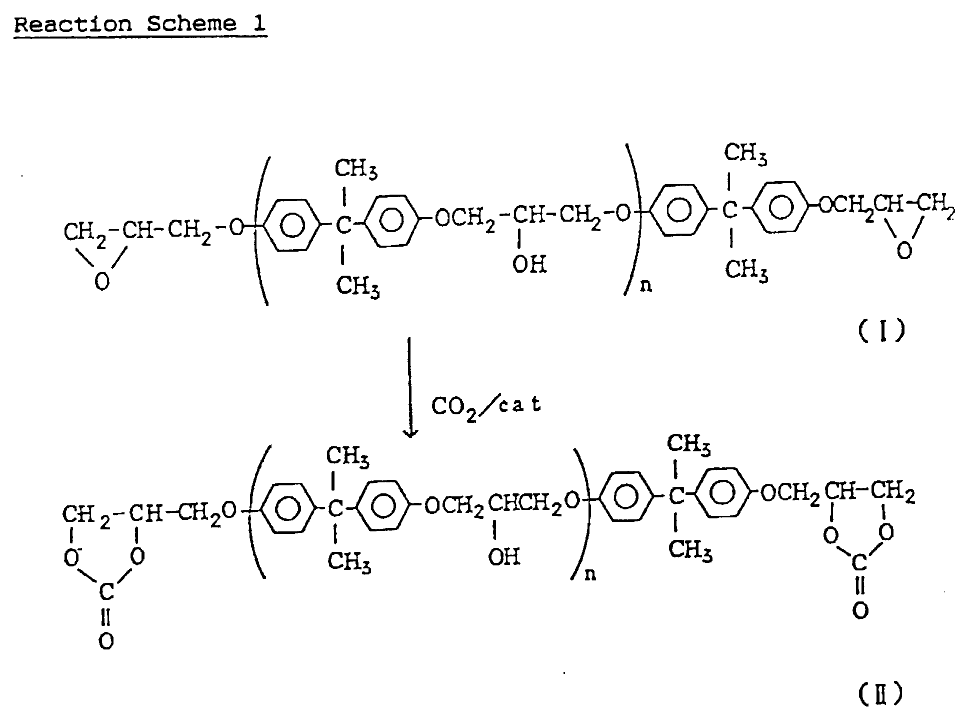

The thus-obtained substances II can be emulsified in water with the usual additives (emulsifiers, protective colloids, etc.) and by applying shearing forces. The bis-cyclocarbonato-epoxy resins II contain one or more secondary hydroxyl groups, which can be esterified with a dicarboxylic acid, e.g. maleic, succinic, glutaric or phthalic anhydride, partially or completely, which is shown in Reaction Scheme (2).

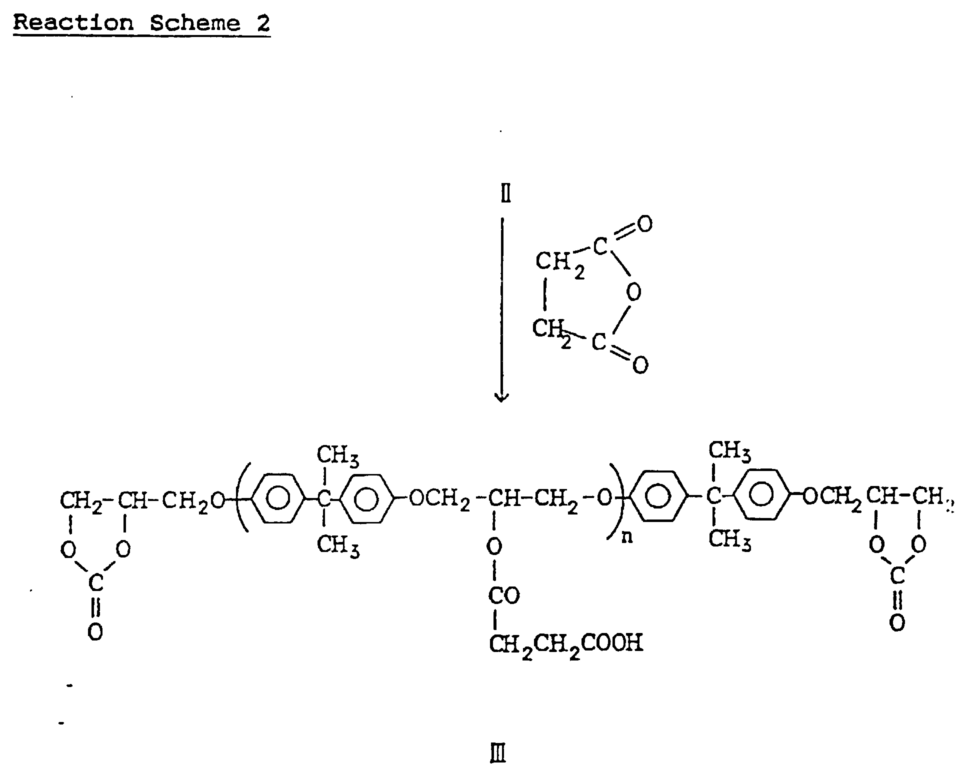

The cyclocarbonate group-containing, with succinic anhydride modified epoxy resins depicted in formula (III) can well be transformed, possibly with partial or complete neutralization with a suitable base, advantageously with a tertiary amine, into storage stable emulsions according to the present invention. Such emulsion are excellently suited as binders for electrodepositable coatings. .

Another group of polymers which can be transferred into storage stable aqueous emulsions or dispersions by emulsifying in water are cyclocarbonate group-containing polyurethanes. They can be obtained for instance from di- or polyisocyanates and suitable polyols and cyclocarbonate-group containing monofunctional alcohols, e.g. according to Reaction Scheme (3).

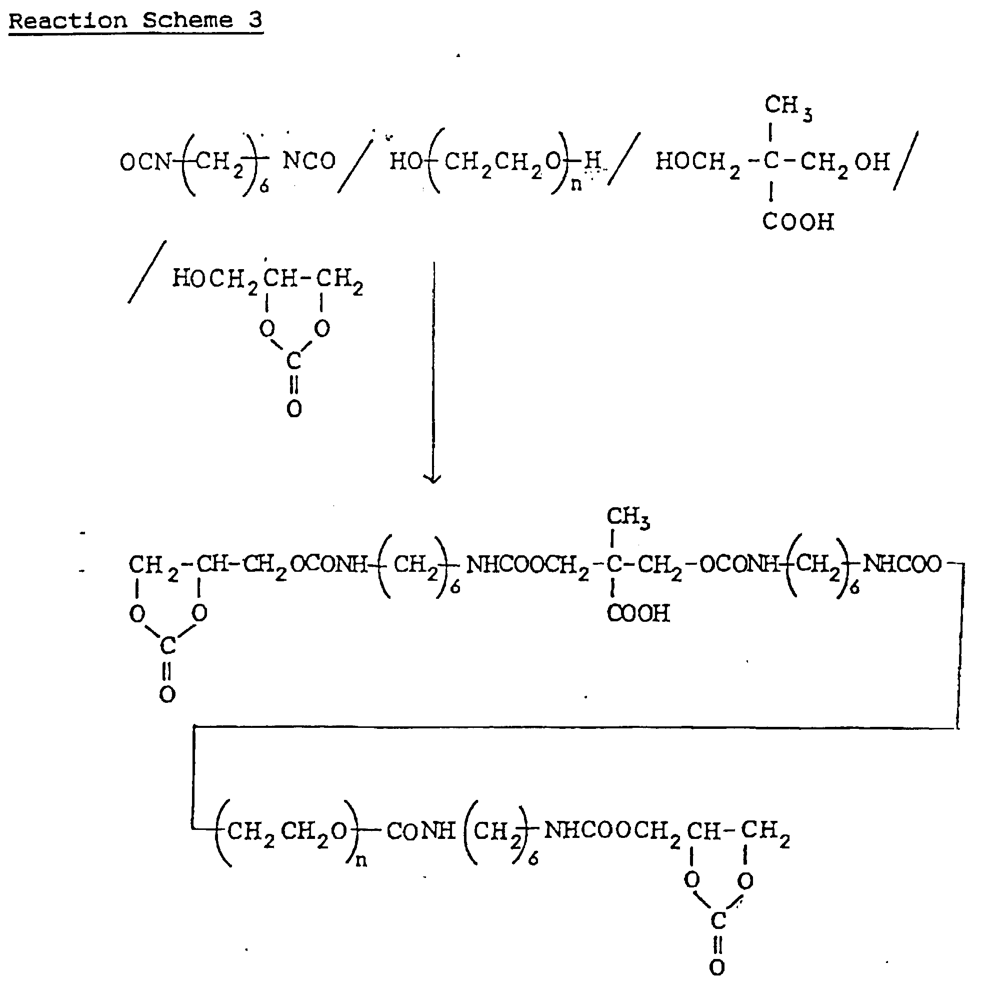

The oligo- or polyurethanes with cyclocarbonate groups synthesized according to Reaction Scheme (3) can be transferred, possibly with partial or complete neutralization, by a suitable base without difficulties into storage stable aqueous emulsions or dispersions according to the present invention. The obtained aqueous emulsions can be used advantageously for the manufacture of coatings, among them electrodepositable paints.

Cyclocarbonate group-containing urea or melamine resins are suited also for the manufacture of storage stable aqueous emulsions. The cyclocarbonate groups can be introduced into common commercial amino-formaldehyde resins which are etherified with a volatile alcohol (e.g., methanol or butanol), for example, by transetherification, which is depicted by Reaction Scheme (4) schematically for the melamine resin Cymel 303 (American Cyanamide Co.) and (4-hydroxymethyl)-2-oxo-1.3-dioxolane:

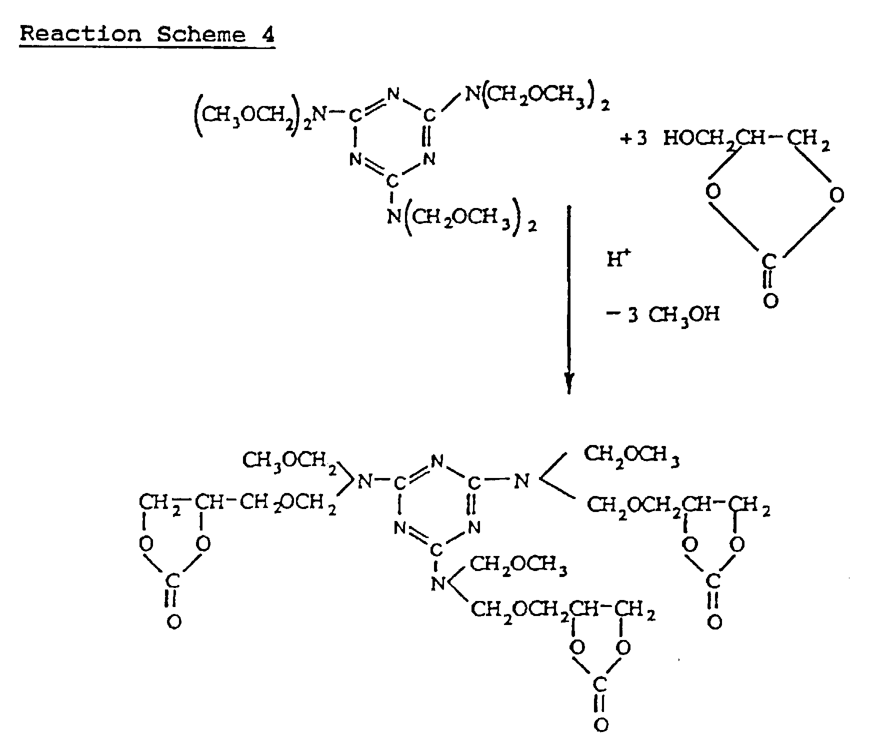

The thus-obtained products, which undergo an acid-catalyzed condensation reaction to a certain extent during the transetherification usually can well be emulsified in water similar to the common commercial amino resins.

Polyesters, manufactured from aliphatic di- and polycarboxylic acids with 2 to 10 carbon atoms in the chain or their anhydrides, from unsaturated cyclic or aromatic anhydrides and from aliphatic di- and polyols according to the common polycondensation processes as described, e.g., by T. C. Patton in "Alkyd Resin Technology", Interscience Publishers, New York, London 1962 and which have an acid number exceeding 5 mg KOH/g polymer, can be modified with suitable OH-functional cyclocarbonate compounds, as e.g., hydroxymethylcyclocarbonate, by partial esterification of the free acid groups and can be emulsified in water after partial or complete neutralization of the remaining acid groups with alkali metal hydroxides, secondary or tertiary aliphatic or aromatic amines, by applying shearing forces and possibly by removal of a solvent. This procedure is depicted schematically in Reaction Scheme (5).

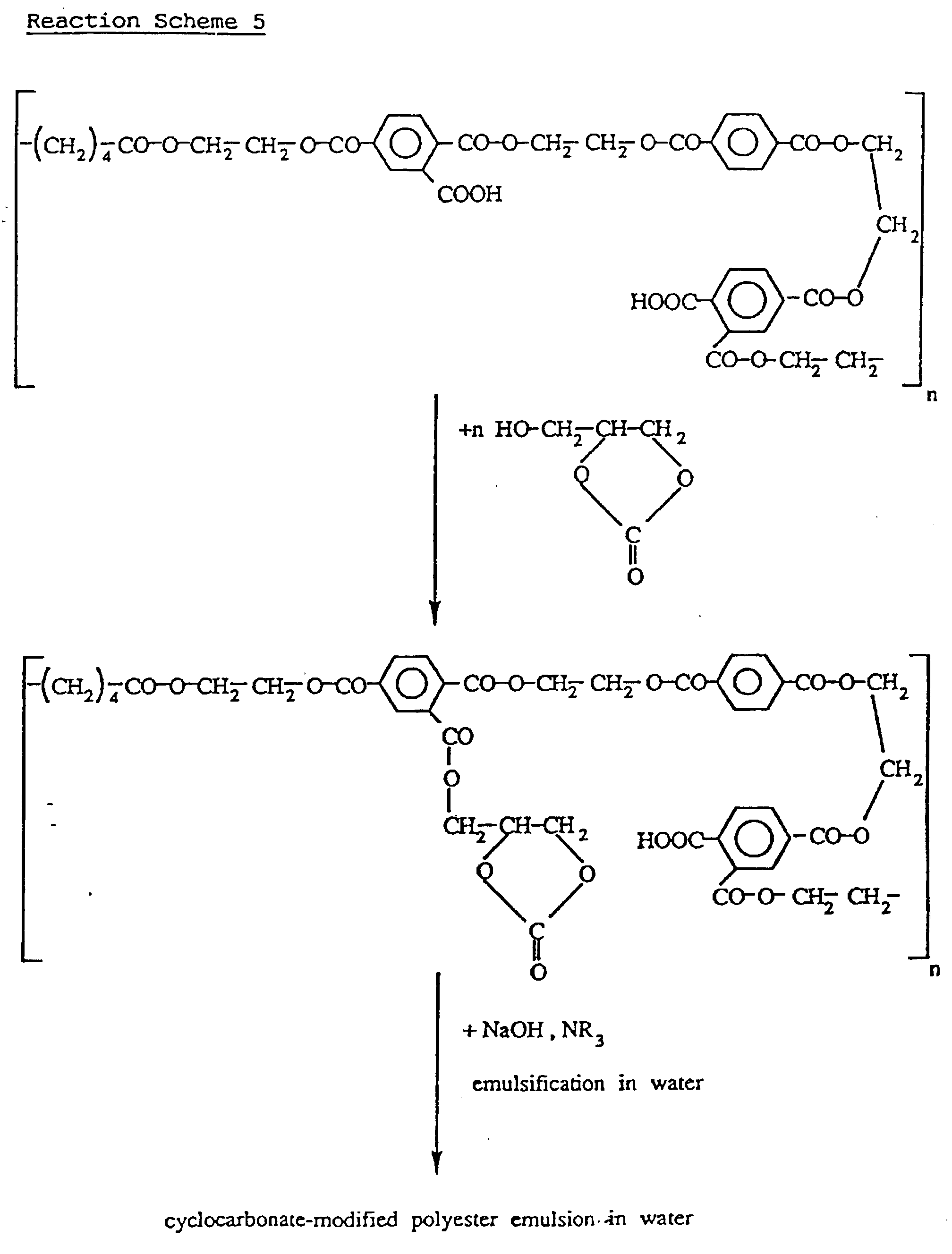

Obviously also alkyd resins, manufactured from triglycerides, cyclic anhydrides, polycarboxylic acids and other diols or polyols, can be modified and emulsified in a similar way as long as they have a sufficient number of free acid groups.

The following examples explain the process according to the invention more closely.

In the following examples water means always completely deionized water.

### Example 1

In a polymerization reactor flushed with nitrogen a mixture of 4 g sodium dodecylsulfate and 263 g water is heated under stirring to 65°C. After attaining the polymerization temperature 28 g of a monomer mixture, under nitrogen, prepared from 40 g glyceryl-cyclocarbonato-methacrylate, 55 g styrene and 72 g butyl-acrylate, is stirred into the aqueous emulsifier solution. After emulsifying, 15 g of an initiator solution, gassed with nitrogen, prepared from 0.15 g 2.2-azobis-(2-amidinopropane)-dihydrochloride ("Wako Chemicals, Inc.) and 35 g water, is added. It is prepolymerized for 15 minutes. Then during 1.5 hours the rest of the initiator solution, and during 3 hours the rest of the monomer mixture, are dropped in from separate funnels. 1.5 hours after the last monomer addition a solution of 0.15 g of the same initiator in 15 g water, gassed with nitrogen, is added to the reaction mixture and the polymerization is continued for another 2 hours. Approx. 0.3 % of a solid coagulate are deposited. The solid content of the polymer emulsion is 34%, the latex particle sizes are between 0.1 -0.4 µm. The thus obtained polymer emulsion shows no viscosity increase and no flocculation after six months.

### Example 2

In a polymerization reactor flushed with nitrogen a mixture of 3.5 g sodium dioctylsulfosuccinate (Aerosol-OT, "American Cyanamide Co.") and 247 g water is heated to 55°C under stirring. For the start of the polymerization a monomer mixture, gassed with nitrogen, prepared from 31.8 g glyceryl cyclocarbonatomethacrylate, 53 g butyl-acrylate, 70.6 g styrene and 19.8 g methacrylic acid, and 18 g of an initiator solution, gassed with nitrogen, prepared from 0.35 g 2.2′-azobis-(N,N′-dimethyleneisobutyroamidine)-dihydrochloride ("Wako Chemicals, Inc.") and 70.6 g water, are dropped into the emulsifier solution. A milky-white emulsion is formed immediately. After a prepolymerization period of 25 minutes, the rest of the monomer mixture and the rest of the initiator solution are dropped into the reaction mixture during 2 hours from separate funnels. The polymerization is continued for another 2 hours. Approx. 1% of a solid coagulate is deposited. The solid content of the polymer emulsion is 33.5%, the latex particle sizes are between 0.5 - 0.8 µm. The emulsion stays unchanged after half a year.

### Example 3

In a polymerization reactor flushed with nitrogen a mixture of 5 g sodium dodecylsulfate and 260 g water is heated under stirring to 72°C. After attaining the polymerization temperature a solution, under nitrogen, of 0.3 g 2.2′-azobis-(N,N′-dimethyleneisobutyroamidine)-dihydrochloride ("Wako Chemicals, Inc.") in 40 g water and a monomer mixture, under nitrogen, of 20 g glyceryl-cyclocarbonato-methacrylate, 72 g butyl-acrylate, and 75 g methylmethacrylate are dropped into the emulsifier solution during 2 hours from separate funnels. An emulsion is formed immediately. 3 hours after the end of the monomer addition a mixture of 0.05 g of the initiator mentioned above and 8 g water is added to the reaction mixture and the polymerization is continued for another 3 hours. Approx. 0.6% of a solid coagulate are deposited. The solid content of the polymer emulsion is 35%, the latex particle sizes are between 0.2 - 0.5 µm. The emulsion stays unchanged after six months.

### Example 4

A solution of 120 g of a polyurethane prepolymer W 790 (70% solution in methylethylketone, isocyanate content 1.7%, 0.03 g COOH/g polymer, manufacturer: Reichhold Chemie AG, Vienna) and 450 g water-free acetone is heated to reflux under nitrogen. A mixture of 5.5 g glycerincyclocarbonate and 50 g water-free acetone is dropped into the boiling solution during 2 hours. After another 2 hours 0.5 g dibutyl-tin-dilaurate are added. The mixture is then heated under reflux until no free isocyanate groups can be detected (approx. 3 hours, control by IR spectroscopy). The solid content of the modified cyclocarbonate containing polyurethane solution is 14.4%. After cooling to 40°C a mixture of 5.2 g 2-(dimethylamino)-propanol-2, 1.3 g water and 50 g acetone is added to this solution and stirred for 1 hour. The obtained polymer solution is then dropped during 1 hour into 450 g vigorously stirred and at 40°C kept water, while at the same time volatile parts are distilled off under vacuum (approx. 15 mbar). The opaque dispersion after 2 hours contains practically no more organic solvent. The cyclocarbonate modified polyurethane emulsion has a solid content of 15.3% and remains unchanged after 3 months.

### Example 5

In a polymerization reactor, flushed with nitrogen, a mixture of 5 g Aerosol 22 (35% by weight in water, American Cyanamide Co.), and 125 g water is heated to 65°C under stirring, After reaching the polymerization temperature, 10 ml of a solution of 2.2′-azo-bis(2-amidinopropane)-dihydrochloride (WAKO Chemicals Co.) in 40 g water gassed with nitrogen and 25 ml of a monomer mixture from 21 g glyceryl cyclocarbonatomethacrylate, 22.7 g acrylonitrile, 21.8 g styrene and 21.8 g n-butyl acrylate gassed with nitrogen are dropped from separate dropping funnels into the emulsifier solution. An emulsion is formed immediately. The temperature rises to 70°C. 25 minutes after the start of the polymerization the remaining amounts of initiator solution and monomer mixture are dropped in continuously during 2 hours. Afterwards, the polymerization is continued for another 3 hours at 65 to 70°C. The solid content of the obtained polymer emulsion is 33.8% according to a polymer yield of 97.7%. Less than 1% coagulate is deposited to the stirrer and to the walls of the vessel.

### Example 6

In a polymerization reactor flushed with nitrogen a mixture of 4.4 g Aerosol A 22 (35% by weight in water, American Cyanamide Co.), and 125 g water is heated to 50°C under stirring. After reaching the polymerization temperature a solution of 1.76 g ascorbic acid in 50 g water gassed with nitrogen and a mixture of 22.3 g glyceryl cyclocarbonatomethacrylate, 33.1 g n-butyl acrylate, 33.1 g styrene and 1.16 g tert.-butylhydroperoxide (70% in water) gassed with nitrogen are dropped from separate dropping funnels during 35 minutes into the emulsifier solution of 50°C. An emulsion is formed immediately. The polymerization is continued for another 2 hours. The polymer yield is 100% with a solid content of the stable emulsion of 33.3% by weight.

## Claims

1. Storage stable aqueous emulsions of cyclocarbonate group containing polymers
wherein
said emulsion has a solid content of 5 to 80 %, advantageously of 25 to 60 %, of emulsified polymers in which the main chain consists of partially substituted -CH₂- groups, according to the general formula (I) 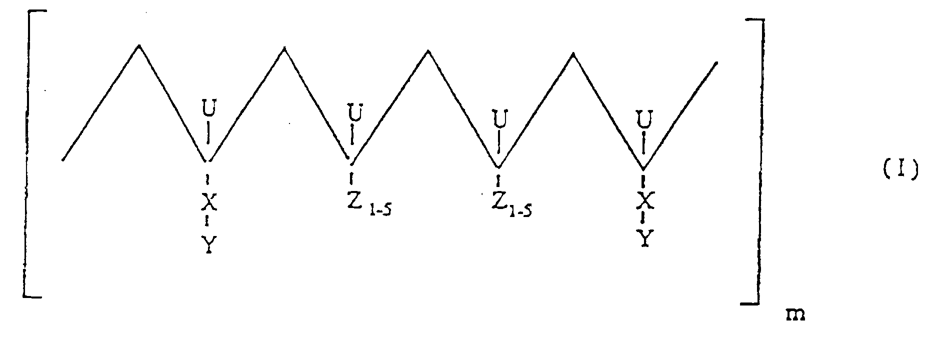 wherein U, X, Z₁ to Z₅ have the following meaning:
U = -H, -CH₃, -COOH, -COOCH₃, -CONH₂, -COO-(CH₂)₁₋₄-X-Y
Y = 2-oxo-1,3-dioxolan-4-yl group of the general formula (II) 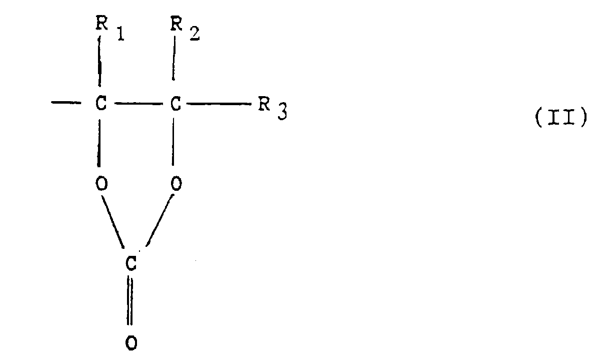 in which
R₁, R₂ and R₃ each stand for a hydrogen atom or a substituted or unsubstituted methyl group, wherein the residues can be identical to each other or different. 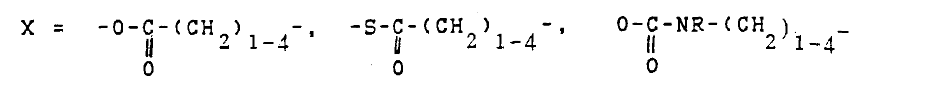 where R = H or alkyl,
Z₁ = -COO-(CH₂)₀₋₁₇-CH₃
Z₂ = phenyl-, meta-, ortho-, para-substituted alkylphenyl groups
Z₃ = -COOH
Z₄ = -CN, -COO-(CH₂)₁₋₄-N-(alkyl)₂, -COO-CH₂-CH₂-N〈
Z₅ = -COO-(CH₂)₁₋₄-OH, -COO-(CH₂-CH₂O)₁₋₁₀-CH₂-CH₂-OH
in which at least two groups -X-Y- per macromolecule have to be present and the groups Z₁ or Z₂ can be present either alone or Z₁ in combination with Z₂ to Z₅, wherein the sum of the weights portions of the polymerizable starting materials with the groups -X- Y and Z₄ in the emulsified macromolecule must not exceed the value of 70 % by weight.

2. Storage stable aqueous emulsions of cyclocarbonate group containing polymers
wherein
said emulsion has a solid content of 5 to 80%, advantageously of 25 to 60 %, of emulsified polymers in which the main chain is built according to the general formula (III) and the secondary OH groups are fully or partially substituted by R₄ 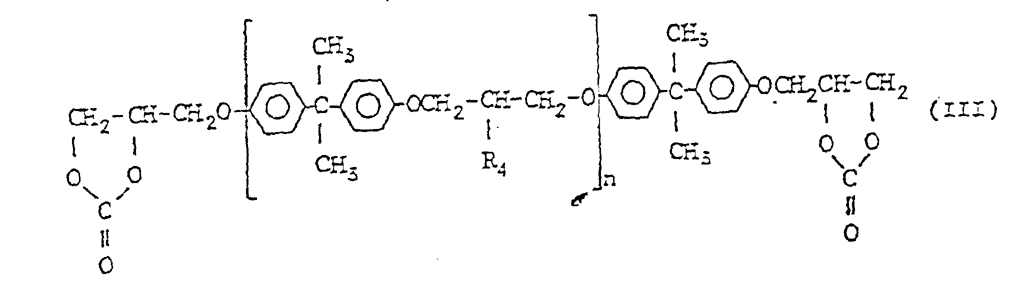 wherein n stands for a number from 1 to 10 and R₄ is a half ester groups of the general formula (IV) 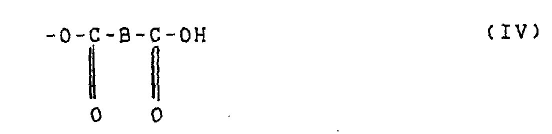 with B being equal to -(CH₂)₂₋₃-, -CH=CH-, or 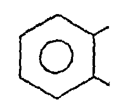 which is fully or partially neutralized with alkali metal ions or with secondary or tertiary amines.

3. Storage stable aqueous emulsions of cyclocarbonate group containing polymers
wherein
said emulsion has a solid content of 5 to 80%, advantageously of 25 to 60%, of emulsified polymers in which the main chain is built according to the general formula (V) 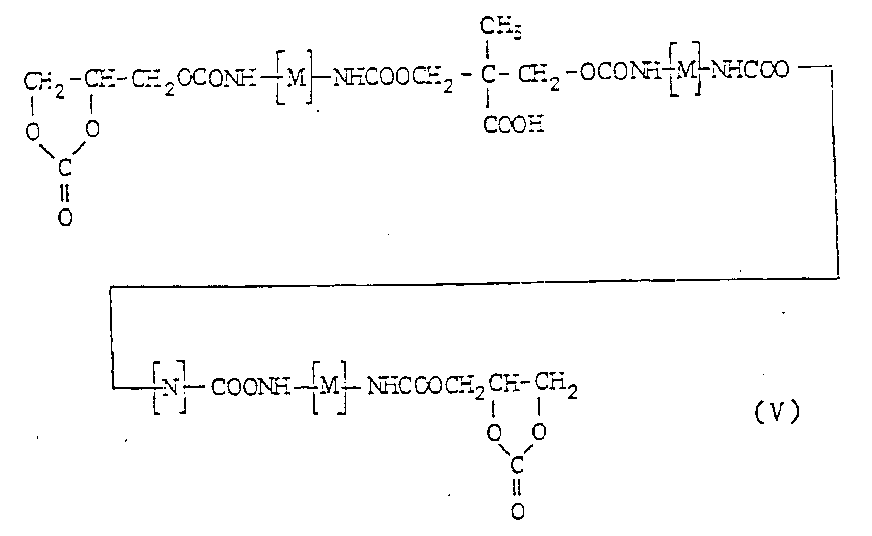 wherein [M] stands for an aliphatic, cycloaliphatic, aromatic or arylaliphatic group with 6 to 20 carbon atoms and [N] is equivalent to a polyalkylene oxide with 0 to 20 repetitive units, to an aliphatic or to a mixed aliphatic-aromatic polyester with a molecular weight of up to 4000 g/mol and wherein the acid groups which are incorporated into the main chain are fully or partially neutralized with alkali metal ions or with secondary or tertiary amines.

4. Storage stable aqueous emulsions of cyclocarbonate group-containing polymers
wherein
said emulsion has a solid content of 5 to 80%, advantageously of 25 to 60%, of emulsified polymers in which the straight or branched main chain is built according to the general formula (VI) 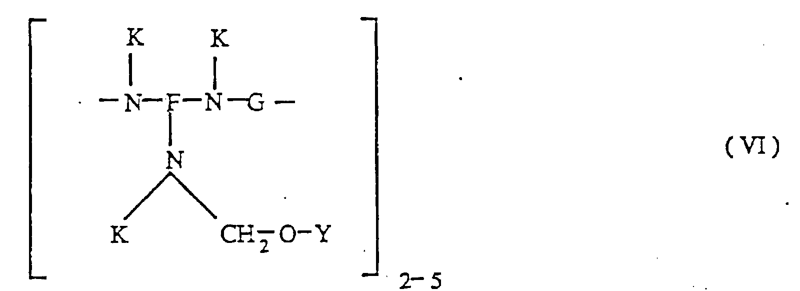 wherein
F = trianzinyl group
G = CH₂-O-CH₂, or -CH₂-,
K = -H, -CH₂COOH, or -CH₂-O-R (with R = H), alkyl with 1 to 4 carbon atoms)
Y = 2-oxo-1,3-dioxolan-4-yl group according to general formula (II)
in which at least two groups Y per macromolecule and not more than 2 groups Y per triamino-triazine unit have to be present.

5. Storage stable aqueous emulsions of cyclocarbonate group containing polymers
wherein
said emulsion has a solid content of 5 to 80%, advantageously of 25 to 60%, of emulsified polymers in which the straight or branched main chain is built according to the general formula (VII) 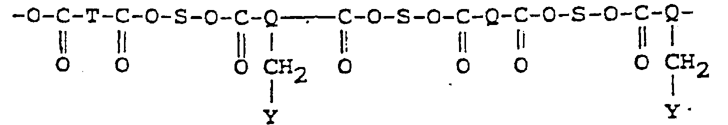 wherein
T = -(CH₂)₂₋₁₀-, -(CH₂-CHR)₁₋₅-, or -CH=CR (with R = H, alkyl, ortho-, meta-, para-substituted phenyl groups)
S = -(CH₂)₂₋₁₂-, -(CH₂-CHR-O-)₁₋₂₀-, or 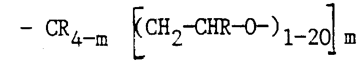 with R = H or alkyl, and m = 1 to 4
Q = tri- or tetrasubstituted phenyl groups with one or two additional -COOH groups
Y = 2-oxo-1,3-dioxolan-4-yl group according to the general formula (II)
in which at least 2 groups Y per macromolecule have to be present and in which the free acid groups in emulsion are fully or partially neutralized with alkali metal ions or with secondary or tertiary amines.

6. Storage stable aqueous emulsions of cyclocarbonate group containing polymers as claimed in anyone of the claims 1 to 5,
wherein
said emulsion has a solid content of 30 to 40 % of emulsified polymers.

7. A process for the manufacture of a storage stable aqueous emulsions of cyclocarbonate group containing polymers according to anyone of the claims 1 to 5,
wherein
solvent-free or solvent-containing polymers, which on average bear per macromolecule at least two 2-oxo-1,3-dioxolan-4-yl groups of general formula (II) above as side or end groups, are emulsified in water.

8. A process for the manufacture of a storage stable aqueous emulsion of emulsified cyclocarbonate group containing polymers as claimed in claim 1.
wherein
said polymers are manufactured by aqueous emulsion copolymerization of
a) 1 to 60 % by weight of a polymerizable compound containing group (II) with
b) 20 to 95 weight % of non-functional esters of acrylic or methacrylic acid in the alcohol residue, and optionally
c) 5 to 75 weight % of aromatic vinyl compounds
d) 1 to 40 weight % of hydroxyl group bearing α,β -ethylenic unsaturated compounds
e) 1 to 20 weight % of alpha, β-unsaturated mono- or dicarboxylic acids
f) 1 to 40 weight % of polar-aprotic acrylic or methacrylic monomers with 1 to 12 carbon atoms and at least one nitrile- or dialkylamino group in the side group,
wherein
the sum of the weight portions a) and f) must not exceed the value of 70 weight % in the polymer, with an anionic emulsifier of a high hydrophilic value and a water-soluble azo initiator or water-soluble organic redox-initiator system in the temperature range between 0° and 70 °C.

9. A coating material
comprising one or several storage stable aqueous emulsion according to anyone of claims 1 to 7 with or without usual additives.

## Patentansprüche

1. Lagerstabile wäßrige Emulsionen von Cyclocarbonatgruppen enthaltenden Polymeren,
dadurch gekennzeichnet, daß
diese einen Festkörpergehalt von 5 bis 80%, vorteilhaft von 25 - 60%, an emulgierten Polymeren enthalten, bei denen die Hauptkette aus teilweise substituierten -CH₂- Gruppen gemäß der allgemeinen Formel I besteht, 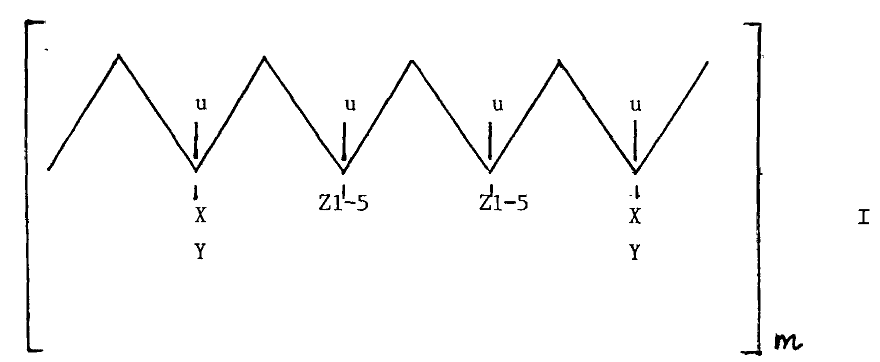 wobei U, X, Y, Z1 - Z5 folgende Bedeutung haben:
U = -H, -CH₃, -COOH₃, -CONH, -CONH, -COO-(CH₂)₁₋₄-X-Y
Y = 2-oxo-1,3-dioxolan-4-yl Gruppe gemäß allgemeiner Formel II 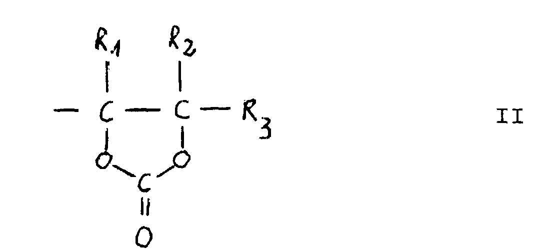 wobei R₁, R₂ und R₃ jeweils ein Wasserstoffatom oder eine substituierte oder unsubstituierte Methylgruppe, wobei die Reste gleich oder verschieden sein können, 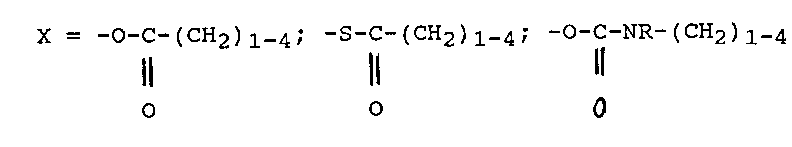 mit
R=H oder Alkyl
Z1 = -COO-(CH₂)₀₋₁₇ -CH₃
Z2 = Phenyl-; meta-, ortho-, para-substituierte Alkylphenylgruppen
Z3 = -COOH
Z4 = CN; 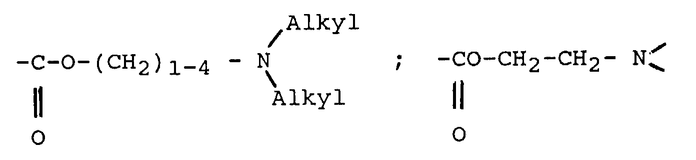
Z5 = -COO-(CH₂)₁₋₄-OH; -COO-(CH₂-CH₂O)₁₋₁₀-CH₂-CH₂-OH
bedeuten, wobei wenigstens 2 Gruppierungen X-Y pro Makromolekül vorhanden sein müssen und die Gruppierung Z1 oder Z2entweder allein, oder Z1 im Gemisch mit Z2 bis Z5 vorliegen können, wobei die Summe der Gewichtsanteile der polymerisierbaren Ausgangsstoffe mit den Gruppierungen X-Y und Z4 im emulgierten Makromolekül den Zahlenwert von 70 Gew.- % nicht überschreiten darf.

2. Lagerstabile wäßrige Emulsionen von Cyclocarbonatgruppen enthaltenden Polymeren,
dadurch gekennzeichnet, daß
diese einen Festkörpergehalt von 5 bis 80%, vorteilhaft von 25 - 60%, an emulgierten Polymeren, deren Hauptkette gemäß der allgemeinen Formel III aufgebaut ist und deren sekundäre OH-Gruppen ganz oder teilweise durch R4 substituiert sind, enthält 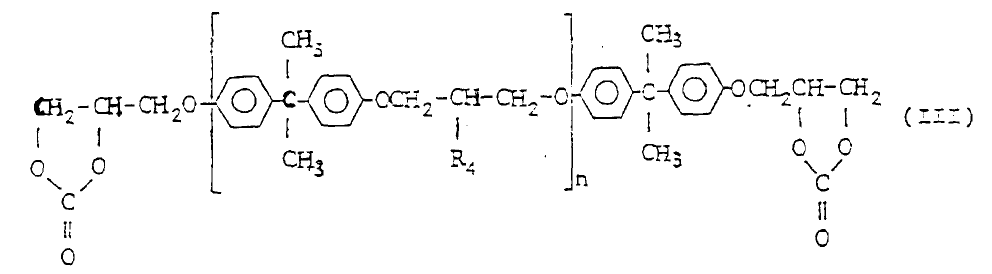 wobei n für eine Zahl von 1 bis 10 steht und R4 eine mit Alkalimetallionen oder mit sekundären oder tertiären Aminen ganz oder teilweise neutralisierte Halbestergruppierung der allgemeinen Formel IV 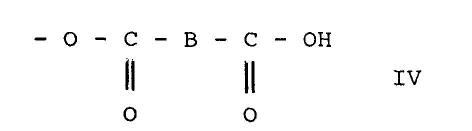 mit B = -(CH₂)₂₋₃, -CH=CH- oder 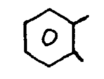 bedeuten.

3. Lagerstabile wäßrige Emulsionen von Cyclocarbonatgruppem enthaltenden Polymeren,
dadurch gekennzeichnet, daß
diese einen Festkörpergehalt von 5 bis 80%, vorteilhaft von 25 - 60%, an emulgierten Polymeren enthält, bei denen die Hauptkette gemäß der allgemeinen Formel V aufgebaut ist, 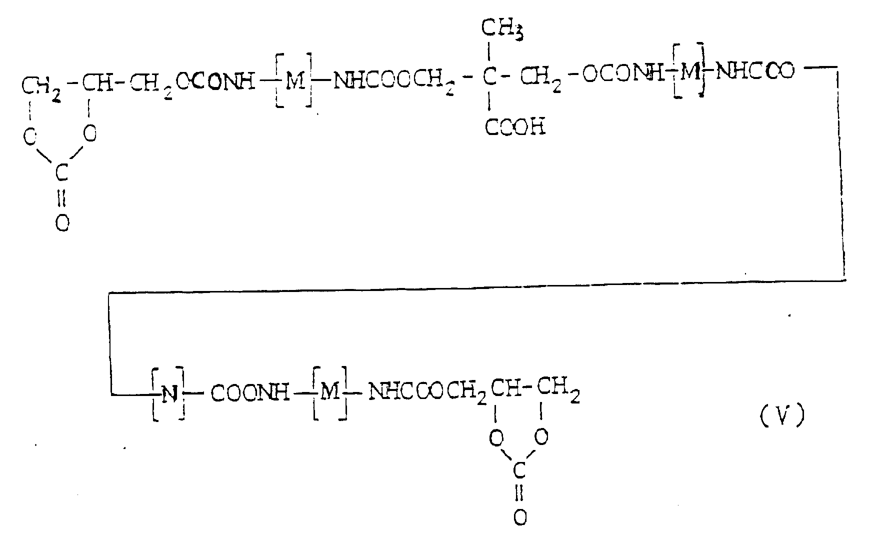 wobei [M] für eine aliphatische, cycloaliphatische, aromatische oder araliphatische Gruppe mit 6 bis 20 Kohlenstoffatomen steht und [N]einem Polyalkylenoxid mit 0 bis 20 Wiederholungseinheiten, einem aliphatischen oder gemischt-aliphatisch-aromatischen Polyester mit einem Molekulargewicht von bis zu 4000 g/mol entspricht und die in die Hauptkette eingebauten Säuregruppen ganz oder teilweise mit Alkalimetallionen oder mit sekundären oder tertiären Aminen neutralisiert sind.

4. Lagerstabile wäßrige Emulsionen von Cyclocarbonatgruppen enthaltenden Polymeren,
dadurch gekennzeichnet, daß
diese einen Festkörpergehalt von 5 bis 80%, vorteilhaft von 25 bis 60%, an emulgierten Polymeren enthält, deren unverzweigte oder verzeigte Hauptkette gemäß der allgemeinen Formel VI 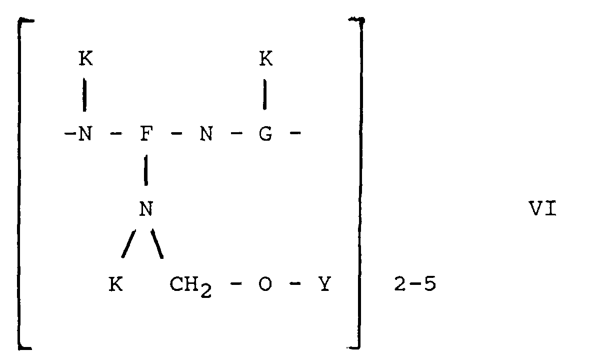 wobei
F = Triazingruppe
G = -CH₂-O-CH₂-, -CH₂-
K = -H, -CH₂COOH; -CH₂-O-R, mit R=H, Alkyl mit 1 bis 4 Kohlenstoffatomen
Y = 2-Oxo-1,3-dioxolan-4-yl-Gruppe gemäß allgemeiner Formel II
bedeuten, wobei wenigstens 2 Gruppierungen Y pro Makromolekül und höchstens 2 Gruppierungen Y pro Triaminotriazin-Einheit vorhanden sein müssen.

5. Lagerstabile wäßrige Emulsionen von Cyclocarbonatgruppen enthaltenden Polymeren,
dadurch gekennzeichnet, daß
diese einen Festkörpergehalt von 5 bis 80%, vorteilhaft von 25 bis 60%, an emulgierten Polymeren enthält, deren unverzweigte oder verzweigte Hauptkette gemäß der allgemeinen Formel VII aufgebaut ist 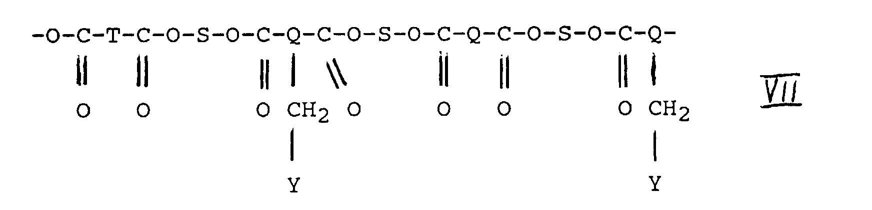 wobei
T = -(CH₂)₂₋₁₀, -(CH₂-CHR)₁₋₅, -CH=CR- mit R=H, Alkyl, ortho-, meta-, para- substituierte Phenylgruppen,
S = -(CH₂)₂₋₁₂-, -(CH₂-CHR-O-)₁₋₂₀-, -CR₄₋ₘ [(CH₂-CHR-O-)₁₋₂₀-]ₘ mit R=H, Alkyl und m=1-4
Q = tri- oder tetrasubstituierte Phenylgruppen mit einer oder zwei zusätzlichen -COOH Gruppen
Y = 2-oxo-1, 3-dioxolan-4-yl Gruppe gemäß allgemeiner Formel II
bedeuten, wobei wenigstens 2 Gruppierungen Y pro Makromolekül vorhanden sein müssen und die freien Säuregruppen in Emulsion ganz oder teilweise mit Alkalimetallionen oder mit sekundären oder tertiären Aminen neutralisiert sind.

6. Lagerstabile wäßrige Emulsion von Cyclocarbonatgruppen enthaltenden Polymeren, nach einem der Ansprüche 1 bis 5,
gekennzeichnet, durch
einen Festkörpergehalt von 30 - 40 % an emulgierten Polymeren.

7. Verfahren zur Herstellung lagerstabiler wäßriger Emulsionen von Cyclocarbonatgruppen enthaltenden Polymeren nach einem der Ansprüche 1 bis 5,
dadurch gekennzeichnet, daß
lösungsmittelfreie bzw. lösungsmittelhaltige Polymere, die im Mittel pro Makromolekül als Seiten- oder Endgruppen mindestens zwei 2-Oxo-1,3-dioxolan-4-yl-Reste der allgemeinen Formel II enthalten, in Wasser emulgiert werden.

8. Verfahren zur Herstellung lagerstabiler wäßriger Emulsionen von Cyclocarbonatgruppen enthaltenden Polymeren,
gekennzeichnet, durch
wäßrige Emulsions-Copolymerisation von
a) 1-60 Gew.-% einer polymerisierbaren, die Gruppierung II enthaltenden Verbindung mit
b) 20-95 Gew.-% nichtfunktioneller Ester der Acryl- bzw. Methacrylsäure mit 1 bis 18 Kohlenstoffen im Alkoholrest und gegebenfalls zusätzlich mit
c) 5-75 Gew.-% aromatischer Vinylverbindungen,
d) 1-40 Gew.-% Hydroxylgruppen tragender a, β-ethylenisch ungesättigter Verbindungen
e) 1-20 Gew.-% a, β-ungesättigter Mono- oder Dicarbonsäure,
f) polar-aprotischer Acryl- bzw. Methacrylmonomeren mit lbis 12 Kohlenstoffatomen und mindestens einer Dialkylaminogruppen in der Seitengruppe,
erhaltenen Polymere, wobei die Summe der Gewichtsanteile a) und f) den Zahlenwert von 70 Gew.-% im Polymer nicht überschreiten darf, mit einem ionischen, vorzugsweise anionischen Emulgator hoher Hydrophilie und einem wasserlöslichen Azonitiator oder einem wasserlöslichen Azoinitiator oder einem wasserlöslichen organischen Redox-Initiator-System im Temperaturbereich zwischen 0 und 70 C hergestellt werden.

9. Beschichtungsmittel
enthaltend
eine oder mehrere lagestabile wäßrige Emulsionen nach einem der Ansprüche 1 bis 7 mit/oder ohne üblichen Zusatzstoffen.

## Revendications

1. Emulsions aqueuses de polymères, stables en stockage, contenant un groupe cyclocarbonate dans lequel
l'émulsion a une teneur en matières solides de 5 à 80 %, avantageusement de 25 à 60 %, de polymères émulsionnés, dans lesquels la chaîne principale consiste en groupes -CH₂- partiellement substitués, selon la formule générale (I) 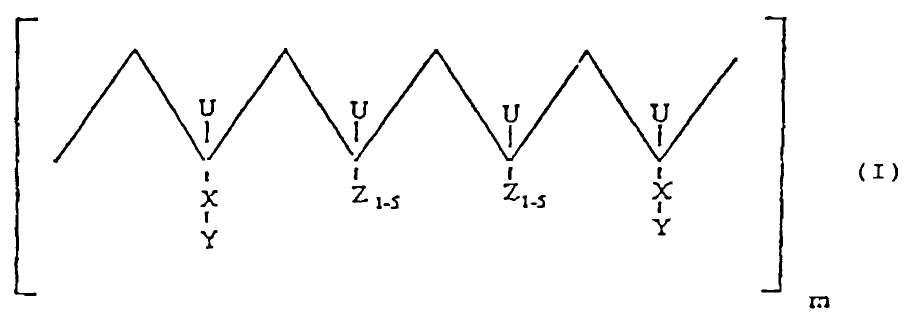 dans laquelle U, X, Z₁ à Z₅ ont la signification suivante :
U = -H, -CH₃, -COOH, -COOCH₃, -CONH₂, -COO-(CH₂)₁₋₄-X-Y
y = groupe 2-oxo-1,3-dioxolan-4-yle de la formule générale (II) 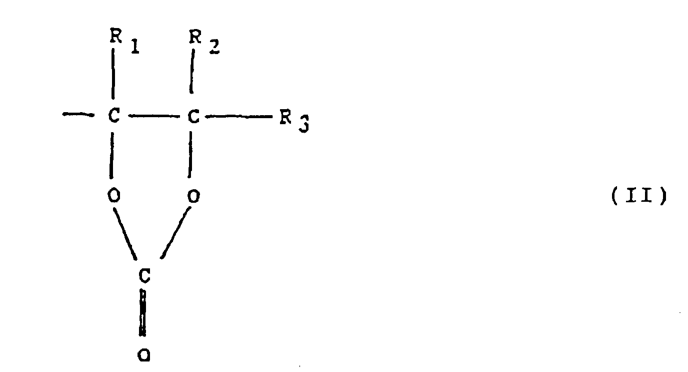 dans laquelle R₁, R₂ et R₃ représentent chacun un atome hydrogène ou un groupe méthyle substitué ou non substitué, dans lequel les résidus peuvent être identiques ou différents entre eux. 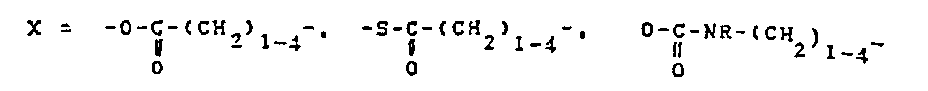 où R = H ou alkyle,
Z₁ = -COO-(CH₂)₀₋₁₇-CH₃
Z₂ = groupes phényle, alkylphényle méta-, ortho-, para-substitués
Z₃ = -COOH
Z₄ = -CN, -COO-(CH₂)₁₋₄-N-(alkyle)₂, -COO-CH₂-CH₂-N〈
Z₅ = -COO-(CH₂)₁₋₄-OH, -COO-(CH₂-CH₂O)₁₋₁₀-CH₂-CH₂-OH
dans lesquels au moins deux groupes -X-Y- par macromolécule doivent être présents et les groupes Z₁ ou Z₂ peuvent être présents seuls ou Z₁ en combinaison avec Z₂ jusqu'à Z₅, dans lequel la somme des portions pondérales des matériaux de départ polymérisables avec les groupes -X-Y et Z₄ dans la macromolécule émulsionnée ne doivent pas dépasser la valeur de 70 % en poids.

2. Emulsions aqueuses de polymères stables en stockage contenant un groupe cyclocarbonate dans lequel
l'émulsion a une teneur en matières solides de 5 à 80 %, avantageusement de 25 à 60 %, de polymères émulsionnés dans lesquels la chaîne principale est construite selon la formule générale (III) et les groupes secondaires OH sont entièrement ou partiellement substitués par R₄ 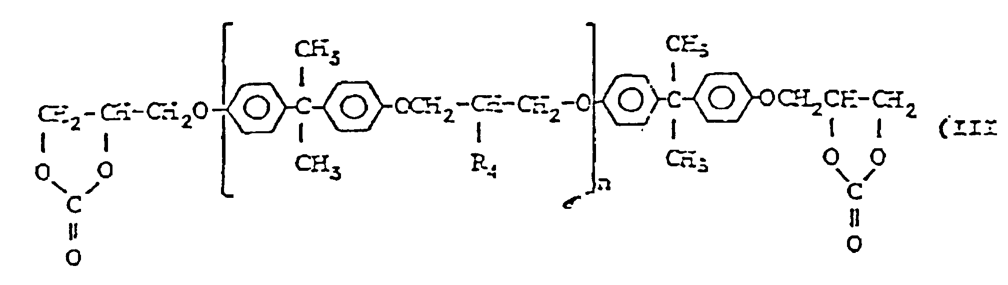 dans laquelle n signifie un nombre de 1 à 10 et R₄ est un groupe semi-ester de formule générale (IV) 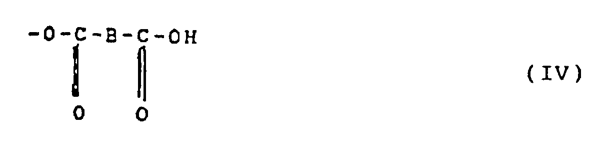 avec B égal a -(CH₂)₂₋₃-, -CH=CH-, ou qui est entièrement ou partiellement neutralisé par des ions alcalino-métalliques ou par des amines secondaires ou tertiaires.

3. Emulsions aqueuses de polymères stables en stockage, contenant un groupe cyclocarbonate dans lequel
l'émulsion a une teneur en matières solides de 5 à 80%, avantageusement de 25 à 60 %, de polymères émulsionnés dans lesquels la chaîne principale est construite selon la formule générale (V) 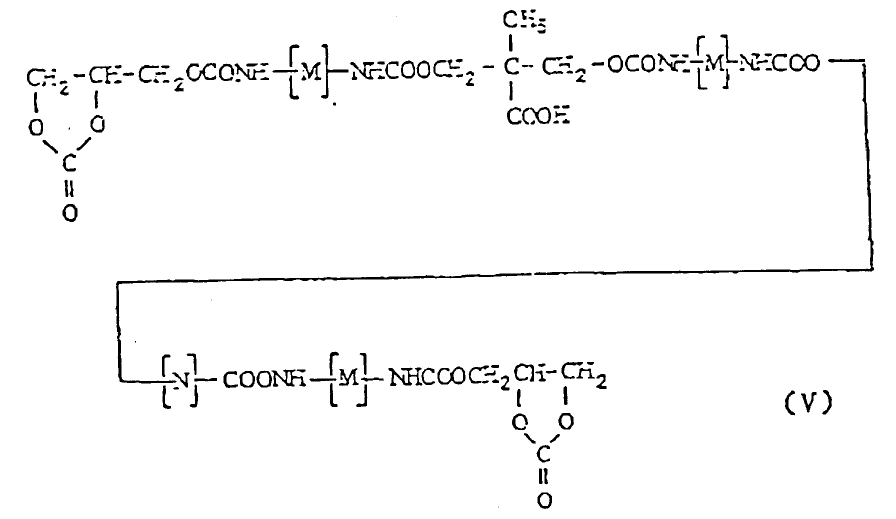 dans laquelle [M] signifie un groupe aliphatique, cycloaliphatique, aromatique ou arylaliphatique avec 6 à 20 atomes de carbone et [N] est équivalent à un oxyde de polyalkylène avec 0 à 20 motifs répétitifs, à un polyester aliphatique ou à un polyester aliphatique-aromatique mixte avec un poids moléculaire jusqu'à 4000 g/mol et dans lequel les groupes acides qui sont incorporés dans la chaîne principale sont entièrement ou partiellement neutralisés par des ions alcalino-métalliques ou par des amines secondaires ou tertiaires.

4. Solutions aqueuses de polymères stables en stockage contenant un groupe cyclocarbonate dans lequel
l'émulsion a une teneur en matières solides de 5 à 80 %, avantageusement de 25 à 60 % de polymères émulsionnés dans lesquels la chaîne principale linéaire ou ramifiée est construite selon la formule générale (VI) 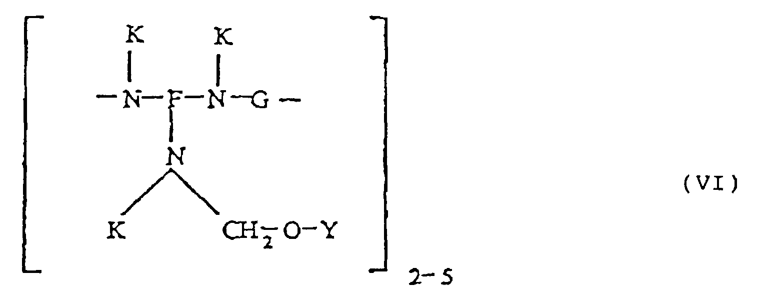 dans laquelle
F = groupe triazinyle
G = -CH₂-O-CH₂-, ou -CH₂-,
K = -H, -CH₂COOH, ou -CH2-C-R (avec R = H), alkyle avec 1 à 4 atomes de carbone)
Y = groupe 2-oxo-1,3-dioxolan-4-yle selon la formule générale (II)
dans laquelle au moins deux groupes Y par macromolécule et pas plus de 2 groupes Y par motifs triamino-triazine doivent être présents.

5. Emulsions aqueuses de polymères stables en stockage contenant un groupe cyclocarbonate dans lequel
l'émulsion a une teneur en matières solides de 5 à 80%, avantageusement de 25 à 60 %, de polymères émulsionnés dans lesquels la chaîne principale linéaire ou ramifiée est conçue selon la formule générale (VII) 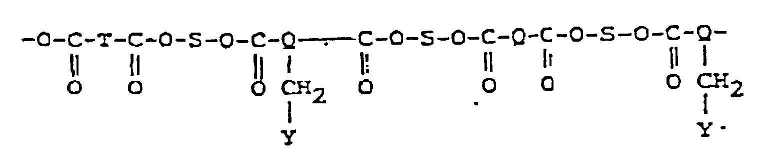 dans laquelle
T = -(CH₂)₂₋₁₀-, -(CH₂-CHR)₁₋₅-, ou -CH=CR (avec R = H, groupes alkyle, phényle, ortho- méta- para-substitués)
S = -(CH₂)₂₋₁₂-, -(CH₂-CHR-O-)₁₋₂₀-, ou -CR₄₋ₘ [(CH₂-CHR-O-)₁₋₂₀]ₘ avec R = H ou alkyle, et m = 1 à 4
Q = groupes phényle tri- ou tétrasubstitués avec un ou deux groupes -COOH supplémentaires
Y = groupe 2-oxo-1,3-dioxolan-4-yle selon la formule générale (II)
dans laquelle au moins 2 groupes Y par macromolécule doivent être présents et dans laquelle les groupes d'acides libres dans l'émulsion sont entièrement ou partiellement neutralisés par des ions alcalino-métalliques ou par des amines secondaires ou tertiaires.

6. Emulsions aqueuses de polymères stables en stockage, contenant un groupe cyclocarbonate selon l'une quelconque des revendications 1 à 5, dans lesquelles
l'émulsion a une teneur en matières solides de 30 à 40% de polymères émulsionnés.

7. Procédé pour la production d'émulsions aqueuses de polymères stables en stockage, contenant un groupe de cyclocarbonate selon l'une quelconque des revendications 1 à 5, dans laquelle
les polymères exempts de solvant ou contenant du solvant qui, en moyenne, portent par macromolécule au moins deux groupes 2-oxo-1,3-dioxolan-4-yle, selon la formule générale (II) ci-dessus, en tant que groupes latéraux ou d'extrémité, sont émulsionnés dans l'eau.

8. Procédé pour la production d'une émulsion aqueuse de polymères stable en stockage, contenant un groupe cyclocarbonate selon la revendication 1, dans lequel
les polymères sont produits par copolymérisation par émulsion aqueuse de
a) 1 à 60 % en poids d'un groupe (II) contenant un composé polymérisable avec
b) 20 à 95 % en poids d'esters non fonctionnels d'acide acrylique ou méthacrylique dans le résidu d'alcool, et facultativement
c) 5 à 75 % en poids de composés vinyle aromatique
d) 1 à 40 % en poids de groupe hydroxyle portant des composés a, β-insaturés éthyléniques
e) 1 à 20 % en poids d'acides alpha, β-insaturés mono- ou dicarboxyliques
f) 1 à 40 % en poids de monomères acryliques ou méthacryliques polaires-aprotiques avec 1 à 12 atomes de carbone et au moins un groupe nitrile- ou dialkylamino dans le groupe latéral dans lequel,
la somme des portions pondérales a) et f) ne doit pas dépasser la valeur de 70 % en poids dans le polymère avec un émulsifiant anionique d'une valeur hydrophile élevée et un amorceur azo hydrosoluble ou un système d'amorceur oxydoréducteur organique hydrosoluble dans la plage de température entre 0 et 70°C.

9. Matériau de revêtement comprenant une ou plusieurs émulsions aqueuses stables en stockage, selon l'une quelconque des revendications 1 à 7, ou sans les additifs usuels.
